Europäisches Patentamt

European Patent Office

Office européen des brevets

(11) Publication number: **0 170 196**
A1

## EUROPEAN PATENT APPLICATION

(21) Application number: 85109246.0

(22) Date of filing: 24.07.85

(51) Int. Cl.⁴: **C 09 J 3/14**
**C 08 L 51/04, C 08 L 55/02**

(30) Priority: 25.07.84 US 634093

(43) Date of publication of application:
05.02.86 Bulletin 86/6

(84) Designated Contracting States:
DE FR GB IT NL

(71) Applicant: BORG-WARNER CHEMICALS INC.
International Center
Parkersburg West Virginia 26101(US)

(72) Inventor: Kliever, Leland Bruce
332 Waxwing Avenue
Naperville Illinois 60540(US)

(72) Inventor: Falk, John Carl
3608 Russett
Northbrook Illinois 60062(US)

(74) Representative: Vossius Vossius Tauchner Heunemann
Rauh
Siebertstrasse 4 P.O. Box 86 07 67
D-8000 München 86(DE)

(54) Construction adhesive composition.

(57) Compositions for use as adhesives and sealants in the construction industry formed of a high rubber graft copolymer having a rubber backbone and at least one graft monomer selected from a vinyl monomer, a vinylidene monomer and mixtures thereof which is extended with an inorganic filler.

EP 0 170 196 A1

Our Ref.: T 908 EP                          July 24, 1985
Case: 084015-M
Borg-Warner Chemicals Inc.
International Center
Parkersburg, West Virginia, USA

## CONSTRUCTION ADHESIVE COMPOSITION

### Description

This invention relates to a polymer composition, and more particularly to a composition which can be used in adhesive and sealant applications capable of providing strong bonds with substrates with good resistance to shock.

A wide variety of adhesive compositions have found extensive use in the manufacture of a variety of construction materials, notably in the field of plywood and laminated construction materials. Adhesives are also finding increasing applications in building construction and assembly operations as at least partial substitutes for mechanical fasteners. Such adhesives distribute stress applied to a plywood panel over a substantially wider area than such mechanical fasteners, resulting in substantial increases in the strength of the assembly. The use of such adhesives has been found to suppress squeaking of construction laminants, and to reduce problems such as nail popping in wallboard and underlayment. Elastomeric construction adhesives provide additional advantages including resistance to dynamic and torsional stresses, good bonding between dissimilar materials such as between plywood and steel framing members, and gap-filling ability for adequate performance in poorly-fitted joints with thick and variable-thickness bond lines.

Construction adhesives must meet rigid performance specifications as laid down by the American Plywood Association, including providing good adhesive shear strength, capability of use over a variety of moisture and temperature conditions and provide the ability to fill gaps between, for example, plywood and framing. In addition, such adhesives must be durable in terms of moisture resistance and oxidation resistance. Such specifications include American Plywood Association specification AFG-01 (September 1974).

Quite a variety of adhesive compositions have been proposed in the prior art. For example, U.S. Patent Nos. 4,104,323 and 4,141,876 are directed to adhesive compositions which are formulated of a polyphenylene ether resin which has been modified with other resins such as block copolymers formed from a conjugated diene and a polymerizable aromatic monomer such as styrene. Such compositions are expensive by reason of the polyphenylene ether component.

Various other adhesives and sealant compositions have been proposed, such as those described in U.S. Patent No. 4,345,047 which are formulated to include a vinyl chloride polymer, a thermosetting epoxy resin and, as a compatibilizer, an acrylonitrile-butadiene-styrene (ABS) copolymer. These materials are useful as adhesives for metal containers.

Additional adhesive compositions are described in U.S. Patent Nos. 2,783,166, 3,496,250, 3,970,623, 4,052,483 and 4,157,319. The adhesives described in those patents are all formulated to include, as one component, an ABS resin. Such compositions, useful as pressure-sensitive adhesives, do not provide the necessary characteristics as described above for use as construction adhesives and sealants.

It is accordingly an object of the present invention to provide a polymer composition which can be used as an adhesive or a sealant in the construction industry which overcomes the foregoing disadvantages.

It is a more specific object of the invention to provide an adhesive composition for use in the construction industry which can be extended by means of fillers and inexpensive resins and yet provide the desired adhesive characteristics of high shear strength, and resistance to shock.

The concepts of the present invention reside in compositions useful as adhesives or sealants in the construction industry which contains, as its essential components, a high rubber graft copolymer in combination with an inorganic filler and a natural resin. It has been found that the high rubber graft copolymers can be extended with relatively inexpensive fillers and hydrocarbon resins and yet still provide good adhesive characteristics, including high shear strength.

The high rubber graft copolymers employed in the practice of this invention are conventional graft copolymers prepared by graft polymerizing less than about 50% by weight of at least one rigid monomer such as a vinyl aromatic monomer, an acrylic monomer, a vinyl nitrile monomer or mixtures thereof in the presence of at least 50% by weight of a rubbery polymer, preferably a rubbery polymer derived from a conjugated diene or rubbery copolymer thereof.

As will be appreciated by those skilled in the art, the rubbery polymer backbone preferably comprises from 50-90% by weight of a rubbery polymer based on a conjugated diene, and preferably a 1,3-diene such as butadiene, isoprene or chloroprene. It is also possible, and sometimes desirable, to employ, as the rubbery polymer backbone, a conjugated diene with less than about 50% by weight of a polymerizable vinyl monomer such as vinyl aromatic monomers (e.g. styrene), an acrylate or methacrylate ester monomer (e.g. methyl methacrylate, ethyl methacrylate, etc.) or a vinyl nitrile monomer (e.g. acrylonitrile or mixtures thereof).

The rubbery polymer backbone is then polymerized with from about 10-50% by weight of a rigid graft phase in which the graft comonomer is a vinyl monomer or a vinylidene monomer. Preferred graft monomers are vinyl aromatic monomers such as styrene, alpha-methyl styrene and the like; acrylic monomers such as acrylic acid, methacrylic acid, as well as their lower alkyl esters such as methyl methacrylate, ethylacrylate and the like; vinyl nitrile monomers such as acrylonitrile; and mixtures of such graft monomers.

As is conventional in the preparation of such rubber graft copolymers, either or both of the rubbery backbone and the graft phase may further include minor proportions (usually less than about 10% by weight) of a copolymerizable di- or tri-functional monomer to crosslink either or both polymeric components. Such high rubber graft copolymers may be prepared in accordance with conventional graft polymerizing techniques including emulsion, suspension, sequential, bulk and

-5-

solution polymerization processes. Such techniques are well known in the art, and have been widely used commercially to produce high rubber graft copolymers as impact modifiers for thermoplastic resins.

Typical of the high rubber graft copolymers used in the practice of this invention is the variety of resins broadly referred to as high rubber ABS resins, generally described as graft copolymers of styrene and acrylonitrile on a backbone of polybutadiene, styrene-butadiene, acrylonitrile-butadiene or acrylate rubbers and which contain more than 50% of the rubber backbone. Also included are high rubber graft copolymers such as methyl methacrylate-styrene-acrylonitrile grafts on polybutadiene or butadiene-styrene rubbers (MABS resins), and graft copolymers of methyl methacrylate, and, optionally, styrene on such rubbery backbone polymers. Many of such resins are commercially available as, for example, the resins sold under the trademark "Blendex Impact Modifiers" by Borg-Warner Chemicals, Inc.

For use in the adhesive compositions according to the practice of this invention, the graft copolymer above described will be extended with hydrocarbon resins and an inorganic filler. Hydrocarbon resins which can be used in the practice of this invention are generally those sold to the rubber compounding industry as tackifying resins, and include solid aromatic petroleum hydrocarbon resins having melting points in the range 70-140°C, such a those sold by Hercules, Inc. under the trade name "Picco 6000 series resins", and terpene resins derived from pine stump resins, insoluble in aliphatic hydrocarbon solvents and generally high in phenolic resins as well as natural resins. Such resins are commercially available from a number of sources, notably including Hercules, Inc. under the trade name "Vinsol".

The fillers which can be used to extend the adhesive compositions of the present invention can be any of a variety of fillers conventionally employed in rubber compounding. They are preferably inorganic fillers such as alumina, silica, kaolin, clays, talc, whiting and the like. Although the fillers may to some extent reinforce the composition, the primary function is to provide the mastic-like consistency needed for most construction adhesive applications. Additionally, the compositions of this invention will permit the use of a substantial proportion of such inexpensive fillers, which markedly reduces the cost of the adhesive composition.

The relative amount of the hydrocarbon resin can be varied within wide ranges, depending in part on the particular application for which the adhesive or sealant composition is to be used. In general, use is made of a hydrocarbon resin in an amount within the range of 25 to 150 parts by weight for each 100 parts by weight of the high rubber graft copolymer, and preferably 50 to 100 parts by weight of the hydrocarbon resin for each 100 parts by weight of the graft copolymer.

Similarly, the amount of the filler can be varied within wide ranges. Best results are usually achieved when the filler represents from 25 to 200 parts by weight of filler for each 100 parts by weight of graft copolymer.

In the use of the composition as an adhesive, it is frequently preferred to dissolve or suspend the components of the adhesive of the present invention in a polar organic solvent which is inert to the adhesive composition. Although any of a variety of such inert solvents may be employed, it is frequently desirable to employ one or more aliphatic ketones alone, or, in combination with lower aliphatic aldehydes or aromatic hydrocarbons. One such solvent which may be usefully employed for these purposes is a mixture of methyl ethyl ketone and acetone in a weight ratio of two parts of the methyl ethyl ketone to one part of the acetone. The amount of solvent employed will depend in part upon the particular solvent selected and the consistency desired for the sealant or adhesive end use envisioned.

As indicated, the compositions of the present invention have been found to be highly useful in the construction industry, and particularly in the bonding of plywood. The rigid phase of the graft copolymer, that is the portion contributed by the graft monomers to the rubber backbone, provides a strong bonding relationship whereas the elastomeric phase of the backbone provides resistance to shock. Moreover, the so-called rigid phase of the graft copolymer, being generally polar, has been found to be particularly desirable in promoting adherence to wet surfaces, and in improving the resistance of the composition to attack by solvents, preservatives, fire retardants and the like.

Having described the basic concepts of the invention, reference is now made to the following examples, which are provided by way of illustration and not by way of limitation of the practice of the invention.

-8-

EXAMPLE 1

This example illustrates the preparation of an adhesive composition of the present invention.

An adhesive composition is formulated by blending together the following components:

|  | Parts By Weight |
|---|---|
| High rubber graft copolymer of styrene and acrylonitrile on a butadiene backbone (Blendex 310 ABS resin) | 100 |
| Hydrocarbon resin from pine stump wood (Vinsol) | 75 |
| Hard clay | 100 |
| Antioxidant | 3 |
| Acetone | 38 |
| Methyl ethyl ketone | 76 |

The foregoing composition is employed in bonding plywood to frames, using dry lumber and dry lumber with a 1/16" (1.6 mm) gap between the parts to be adhered together in accordance with the American Plywood Association AFG-01 specification. The adhesive composition of the present invention provided a shear strength of 351.5 kg for dry lumber, the American Plywood Association standard being 225 lbs (102.1 kg). The shear strength for the lumber with the 1/16" (1.6mm) gap was 167.8 kg, the American Plywood Association standard being 150 lbs (68.0 kg).

## EXAMPLES 2-9

A series of adhesive compositions were formulated with varying levels of clay and other hydrocarbon resins, and tested as in Example 1. The formulations and the test results are summarized in Table I.

## TABLE I

| Ex. No.: | 2 | 3 | 4 | 5 | 6 | 7 | 8 | 9 |
|---|---|---|---|---|---|---|---|---|
| **Component, (pbw)** | | | | | | | | |
| ABS[1] | 100 | 100 | 100 | 100 | 100 | 100 | 100 | 100 |
| Hard Clay | – | 50 | 100 | 150 | 100 | 100 | 100 | 100 |
| Antioxidant | 3 | 3 | 3 | 3 | 3 | 3 | 3 | 3 |
| Solvent[3] | 82 | 102 | 165 | 192 | 82 | 115 | 115 | 115 |
| Vinsol[3] | – | – | – | – | – | 75 | – | – |
| Picco 5140[2] | – | – | – | – | – | – | 75 | 37.5 |
| Picco 6100[2] | – | – | – | – | – | – | – | 37.5 |
| Shear Strength (kg)[3] | | | | | | | | |
| Dry | 199.6 | 344.7 | 231.3 | 140.6 | 199.6 | 322.0 | 117.9 | 99.8 |
| 1/16" (1.6mm) Gap Shear Strength (kg)[3] | 99.8 | 81.6 | 99.8 | 95.3 | 99.8 | 167.8 | 95.3 | 95.3 |

Notes: (1) ABS = Blendex®310 ABS resin from Borg-Warner Chemicals, Inc.

(2) Picco®5140 and Picco®6100 = Aromatic petroleum hydrocarbon resins from Hercules Chemical Co.

(3) See Example 1.

## EXAMPLE 10

The formulation of Example 1 was used to prepare an adhesive composition, using in place of the ABS resin a high-rubber (62.5%) graft copolymer of 60 pbw acrylonitrile graft copolymerized in the presence of 100 pbw of butadiene-acrylonitrile rubber (23.1% acrylonitrile). The adhesive composition had a shear strength of 180 lbs with dry lumber, and 45.4 kg in the 1/16" (1.6 mm) gap fill test.

The invention will thus be seen to be an adhesive composition comprising a high rubber ABS graft copolymer and an inorganic filler, with from about 25 to 200 parts by weight filler per hundred parts of said ABS graft copolymer. The composition may further comprise from 25 to 150 parts by weight hydrocarbon resin per hundred parts high rubber ABS graft copolymer. In order to be applied in the field, the composition may be suspended, dispersed or dissolved in an amount of solvent sufficient to impart the desired consistency for the particular adhesive or sealant application envisioned.

It will be understood that various changes and modifications can be made in the details of procedure, formulation and use without departing from the spirit of the invention, especially as defined in the following claims.

## CLAIMS

1. An adhesive composition comprising:

   (a) a high rubber graft copolymer having a rubber backbone and at least one graft monomer selected from the group consisting of a vinyl monomer, a vinylidene monomer and mixtures thereof, and

   (b) an inorganic filler.

2. An adhesive composition comprising:

   (a) a high rubber graft copolymer having a rubber backbone and at least one graft monomer selected from the group consisting of a vinyl monomer, a vinylidene monomer and mixtures thereof;

   (b) a hydrocarbon resin selected from the group consisting of aromatic petroleum hydrocarbon resins and terpene resins, and

   (c) an inorganic filler.

3. A composition as defined in claim 2 wherein the rubber backbone is a rubbery polymer based on a conjugated diene.

4. A composition as defined in claim 2 wherein the rubbery polymer is selected from the group consisting of polymers of butadiene, isoprene, chloroprene and copolymers thereof with a vinyl monomer.

5. A composition as defined in claim 2 wherein the graft monomer is selected from the group consisting of a vinyl aromatic monomer, an acrylic monomer, a vinyl nitrile monomer and mixtures thereof.

6. A composition as defined in claim 2 wherein the graft copolymer is a graft copolymer of styrene and acrylonitrile on a butadiene backbone.

7. A composition as defined in claim 2 wherein the hydrocarbon resin is present in an amount within the range of 25 to 150 parts by weight of hydrocarbon resin for each 100 parts of the graft copolymer.

8. A composition as defined in claim 2 wherein the inorganic filler is present in an amount within the range of 25 to 200 parts by weight of inorganic filler for each 100 parts by weight of the graft copolymer.

9. A composition as defined in claim 2 wherein the inorganic filler is a clay.

10. Use of the composition as defined in any of claims 1 to 9 as an adhesive or sealant.

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | DE-A-1 594 154 (MONSANTO) <br> * Claims; page 2, paragraph 3; page 3, paragraph 2; page 6, paragraph 2; example * <br><br> ----- | 1-10 | C 09 J  3/14 <br> C 08 L  51/04 <br> C 08 L  55/02 |

TECHNICAL FIELDS SEARCHED (Int. Cl.4)

C 09 J
C 08 L

The present search report has been drawn up for all claims

| Place of search | Date of completion of the search | Examiner |
|---|---|---|
| THE HAGUE | 20-11-1985 | FOUQUIER J.P. |